# FASCICULE DE BREVET EUROPEEN

(11) **EP 2 976 197 B1**
(45) Date de publication et mention de la délivrance du brevet: **09.05.2018**
(21) Numéro de dépôt: 14715374.6
(22) Date de dépôt: 17.03.2014
(51) Int. Cl.: B28D 1/14

(54) **PROCEDE DE PERCAGE D'UNE LENTILLE OPHTALMIQUE SELON UNE TRAJECTOIRE HELICOIDALE ET DISPOSITIF DE PERCAGE ASSOCIE**
LINSENBOHRVERFAHREN ENTLANG EINER SPIRALFÖRMIGEN FLUGBAHN UND VORRICHTUNG ZUR DURCHFÜHRUNG EINES SOLCHEN VERFAHRENS
LENS DRILLING PROCESS ALONG AN HELICOIDAL TRAJECTORY AND DEVICE TO CARRY-OUT SUCH A PROCESS

(30) Priorité: 22.03.2013 FR 1352605
(43) Date de publication de la demande: 27.01.2016
(73) Titulaire: Essilor International, 94220 Charenton-le-Pont (FR)
(72) Inventeur: LEMAIRE, Cédric, F-94220 Charenton-le-Pont (FR); PINAULT, Sébastien, F-94220 Charenton-le-Pont (FR)
(74) Mandataire: Jacobacci Coralis Harle
(86) Numéro de dépôt international: PCT/FR2014/050614
(87) Numéro de publication internationale: WO 2014/147327

(56) Documents cités:
- WO-A1-2007/104844
- WO-A2-2006/103649
- FR-A1- 2 969 017
- FR-A1- 2 975 027

## Description

### DOMAINE TECHNIQUE AUQUEL SE RAPPORTE L'INVENTION

La présente invention concerne de manière générale le domaine des procédés de perçage de lentilles ophtalmiques.

Elle concerne plus particulièrement un procédé de perçage d'une lentille ophtalmique comportant les étapes suivantes :
- mémorisation de la forme et des dimensions souhaitées d'un trou de perçage de la lentille et de la position du débouché de ce trou de perçage sur l'une des faces de la lentille,
- positionnement d'un outil de perçage en vis-à-vis de la position mémorisée du trou à percer,
- détermination d'une consigne de pilotage du déplacement transversal et de l'avance de l'outil de perçage,
- perçage de la lentille suivant ladite consigne de pilotage.

Elle concerne également un dispositif de perçage associé.

### ARRIERE-PLAN TECHNOLOGIQUE

Un tel procédé correspondant au préambule de la revendication 1 est connu du document WO2007/104844A1 du même demandeur.

Lorsque la monture est du type sans cercle, le détourage de la lentille ophtalmique et, éventuellement, l'abattement des arêtes vives (chanfreinage) sont suivis du perçage approprié des lentilles pour permettre la fixation des branches et du pontet nasal de la monture sans cercle.

Certains perçages peuvent aussi être réalisés pour des raisons esthétiques ou non fonctionnelles.

Le perçage peut être effectué sur une meuleuse ou sur une machine de perçage distincte. Pour réaliser le perçage sur une machine intégrant les moyens de détourage, cette machine est alors pourvue, en plus des moyens de détourage, de moyens spécifiques au perçage.

On connaît plusieurs procédés de perçage.

Lors d'un perçage par avance simple, la pointe d'un outil est positionnée sur l'une des faces de la lentille ophtalmique destinée à être percée, à l'endroit souhaité pour le débouché de ce trou sur cette face de la lentille.

La lentille est alors percée au moyen d'une mobilité d'avance relative de l'outil de perçage par rapport à la lentille suivant l'axe de rotation de l'outil. Le déplacement de la pointe de l'outil se fait alors selon une trajectoire rectiligne le long de l'axe de rotation de cet outil de perçage.

Pour réaliser des trous de différentes tailles et/ou de différentes formes avec un même outil de perçage, il est connu du document WO2007/104844 de mettre en oeuvre une méthode de perçage particulière appelée perçage par contournement.

Le perçage par contournement est réalisé de la manière suivante. Après avoir mémorisé la forme et la dimension souhaitées du trou de perçage à réaliser ainsi que la position de ce trou sur la surface de la lentille, l'outil de perçage est positionné en vis-à-vis de la position mémorisée du trou à percer.

Dans une première étape, la lentille est alors percée, sur toute la profondeur souhaitée du trou ou sur une partie de cette profondeur, par une avance simple de l'outil suivant son axe de rotation. Puis, dans une deuxième étape, la pointe de l'outil, qui est engagée dans la lentille, est déplacée transversalement, c'est-à-dire dans un plan perpendiculaire à l'axe de rotation de cet outil de perçage, à la manière d'une fraise, suivant une trajectoire dans ce plan qui dépend de la forme et des dimensions souhaitées pour le trou de perçage.

Ce procédé de perçage par contournement présente l'inconvénient d'être long à mettre en oeuvre, notamment lorsque l'épaisseur de la lentille ophtalmique à percer est importante. En outre, selon la profondeur du trou à percer et la résistance du matériau de la lentille, il peut être nécessaire de réaliser plusieurs étapes successives d'avance et de déplacement transversal alternées.

Ceci est d'autant plus dommageable que l'épaisseur de la lentille à percer est grande et que le matériau de la lentille est difficile à percer. En effet, dans ces cas particuliers, il est en outre nécessaire de ralentir la vitesse de progression de l'outil pour éviter de le casser. Le temps d'exécution du perçage est ainsi encore allongé.

L'allongement du temps d'exécution du perçage est un inconvénient d'autant plus important qu'il peut entraîner un échauffement du matériau de la lentille et la formation de fissures, voir la casse de la lentille après propagation de ces fissures. Il est aussi connu du document WO2006103649 de réaliser un usinage à l'aide d'un outil qui se déplace selon une trajectoire pseudo-hélicoïdale.

### OBJET DE L'INVENTION

Afin de remédier à l'inconvénient précité de l'état de la technique, la présente invention propose un nouveau procédé de perçage autorisant le perçage de trous de différentes formes et/ou dimensions avec un même outil de perçage, rapide et simple à mettre en oeuvre. L'invention a trait à un procédé défini par les caractéristiques de la revendication 1.

D'autres caractéristiques non limitatives et avantageuses du procédé conforme à l'invention sont les suivantes :
- on détermine la consigne de pilotage du déplacement transversal et de l'avance de l'outil de perçage en fonction d'au moins une caractéristique mécanique et/ou géométrique de la lentille distincte de la forme et des dimensions souhaitées du trou de perçage ;
- on détermine la consigne de pilotage du déplacement transversal et de l'avance de l'outil de perçage en fonction d'au moins l'épaisseur de la lentille ;
- on détermine la consigne de pilotage du déplacement transversal et de l'avance de l'outil de perçage en fonction au moins du matériau de la lentille ;
- on détermine la consigne de pilotage du déplacement transversal de l'outil de perçage en fonction d'au moins une caractéristique mécanique et/ou géométrique de l'outil de perçage ;
- on détermine la vitesse d'avance de l'outil de perçage en fonction de la profondeur de la position de la pointe de l'outil de perçage par rapport à la lentille ;
- la consigne de pilotage de l'outil de perçage comprend une passe unique aboutissant au perçage du trou de perçage selon la forme et les dimensions souhaitées du trou de perçage ;
- la consigne de pilotage de l'outil de perçage comprend au moins deux passes, dont une première passe aboutissant au perçage du trou selon des dimensions transverses inférieures aux dimensions transverses souhaitées du trou et selon la profondeur souhaitée du trou et une deuxième passe aboutissant au perçage du trou selon les dimensions transverses souhaitées du trou et la profondeur souhaitée de ce trou ;
- la consigne de pilotage de ladite première passe impose un déplacement plus rapide de l'outil de perçage que la consigne de pilotage de la deuxième passe, qui impose la trajectoire hélicoïdale ou pseudo-hélicoïdale de la pointe de l'outil de perçage ;
- la consigne de pilotage de ladite première passe impose la trajectoire hélicoïdale ou pseudo-hélicoïdale de l'outil de perçage et la consigne de pilotage de la deuxième passe impose une avance axiale sans déplacement transversal de l'outil ou un déplacement transversal sans avance axiale de l'outil ;
- la détermination de la consigne de pilotage est réalisée dynamiquement pendant le perçage de la lentille.

L'invention concerne également un dispositif de perçage numérique défini par les caractéristiques de la revendication 12.

Avantageusement, l'outil de perçage est également adapté à réaliser le détourage de la lentille.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de profil d'une lentille ophtalmique et d'un outil de perçage montrant la trajectoire de la pointe de l'outil dans la lentille selon un premier mode de réalisation du procédé de perçage selon l'invention,
- la figure 2 est une vue schématique en perspective de la lentille ophtalmique de la figure 1, avec le trou percé par l'outil et la trajectoire de la pointe de l'outil dans cette lentille,
- la figure 3 est une vue schématique de dessus de la trajectoire de la pointe de l'outil de perçage de la figure 1,
- la figure 4 est une vue schématique de dessus de la trajectoire de la pointe de l'outil de perçage selon un deuxième mode de réalisation du procédé selon l'invention,
- la figure 5 est une vue schématique en coupe d'une lentille ophtalmique montrant la trajectoire de la pointe de l'outil dans la lentille selon un troisième mode de réalisation du procédé de perçage selon l'invention,
- la figure 6 en perspective d'un dispositif de détourage et de perçage d'une lentille ophtalmique pour la mise en oeuvre du procédé selon l'invention,
- la figure 7 est une vue schématique en perspective d'un module de perçage du dispositif de détourage et de perçage de la figure 6.

En préambule, on notera que les éléments identiques ou correspondants des différents modes de réalisation représentés sur les figures seront, dans la mesure du possible, identifiés par les mêmes signes de référence et ne seront pas décrits à chaque fois.

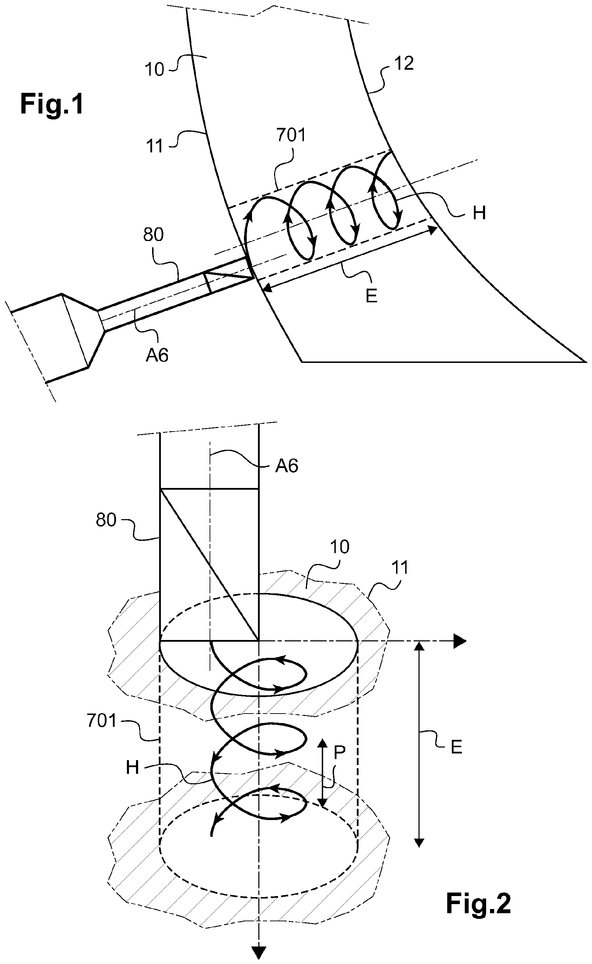

On a représenté sur les figures 1 à 5 une lentille ophtalmique 10. Cette lentille ophtalmique 10 est destinée à être montée dans une monture de type « percée ». A cet effet, au moins deux trous 701 ; 702 ; 703 doivent être percés dans chaque lentille ophtalmique 10 pour permettre la fixation d'une branche et du pontet de la monture.

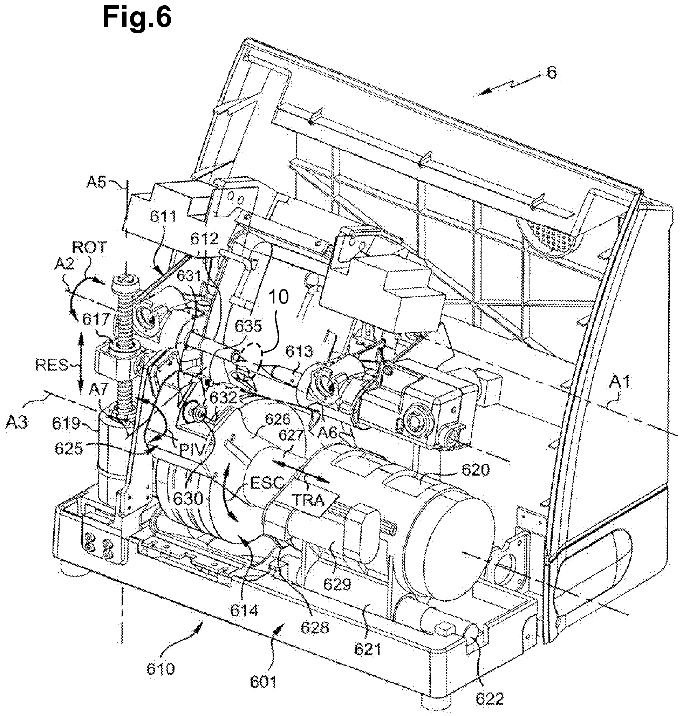

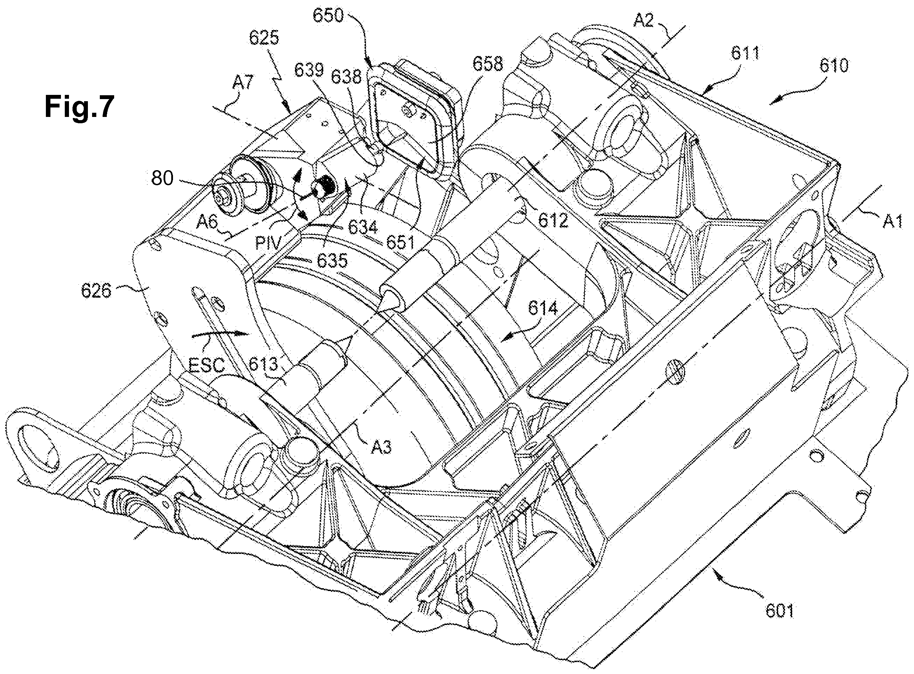

Pour cela, la lentille ophtalmique 10 est disposée dans un dispositif 6 de détourage et de perçage conforme à l'invention, représenté sur les figures 6 et 7 et décrit plus en détails ultérieurement. Ce dispositif 6 de détourage et de perçage comporte ici un outil 80 de perçage.

Ce dispositif 6 de détourage et de perçage est ici avantageusement adapté à la fois à détourer et à percer la lentille ophtalmique 10. En variante, la lentille ophtalmique 10 pourrait être disposée dans un dispositif de perçage dédié, comportant un outil de perçage similaire.

On entend ici par outil 80 de perçage un foret de perçage comportant au moins une arête de coupe générant, lors de la rotation de cet outil autour de son axe de rotation, une surface de coupe adaptée à creuser le trou 701 ; 702 ; 703 de perçage dans la lentille ophtalmique. Cette surface de coupe peut être par exemple cylindrique, conique ou hémi-sphérique.

On entend par pointe de l'outil le centre de son extrémité libre.

La surface de coupe couvre ici l'extrémité libre de l'outil de perçage et une partie de la surface latérale de révolution de cet outil.

Selon le rapport entre la longueur de cette surface de coupe le long de l'axe de rotation de l'outil 80 de perçage, appelée longueur utile de l'outil de perçage, et la longueur totale de l'outil de perçage, on parle d'outil à taillage court ou long.

L'outil 80 peut ainsi par exemple être constitué d'une fraise à rainurer à taillage court. Cette fraise à rainurer présente par exemple les dimensions suivantes : un diamètre égal à 1,2 millimètre et une longueur utile égale à 1,2 millimètre.

L'outil 80 peut également être constitué d'une fraise taillée sur toute la longueur de cet outil le long de l'axe de perçage. Une telle fraise présente par exemple un diamètre de 0,8 ou 1 millimètre et une longueur utile égale à 8 millimètres, qui est la longueur totale de cet outil.

L'outil de perçage à taillage court présente l'avantage d'avoir une rigidité plus importante que l'outil à taillage long, puisque l'arête de coupe s'étend sur une longueur moins grande de celui-ci. Cet outil de perçage à taillage court est donc moins fragile et les risques de rupture de l'outil sont limités.

Cependant, l'état de la surface intérieure du trou percé avec l'outil de perçage à taillage court peut être moins satisfaisant que celui obtenu avec l'outil de perçage à taillage long car il peut être nécessaire d'effectuer plusieurs passes de perçage afin de percer le trou sur la profondeur souhaitée dans la lentille ophtalmique.

Ceci sera expliqué plus en détails plus loin.

A la figure 6, on a représenté le dispositif 6 de détourage et de perçage équipé d'un module de perçage 625 pour la mise en oeuvre du procédé selon l'invention.

Le dispositif 6 de détourage et de perçage comporte des moyens de détourage et des moyens de perçage de la lentille ophtalmique 10.

### Moyens de détourage

La fonction de détourage du dispositif 6 de détourage et de perçage peut être réalisée sous la forme de toute machine de découpage ou d'enlèvement de matière adaptée à modifier le contour de la lentille ophtalmique pour l'adapter à celui du cadre ou "cercle" d'une monture sélectionnée ou à la forme finale de la lentille ophtalmique souhaitée pour une monture percée. Une telle machine peut consister par exemple en un outil d'usinage du type meuleuse, machine de découpage au laser ou par jet d'eau, etc.

Comme le montre la figure 6, le dispositif de détourage comporte, de manière connue en soi, une meuleuse 610 automatique, communément dite numérique. Cette meuleuse 610 comporte, en l'espèce, une bascule 611, qui est montée librement pivotante autour d'un premier axe A1, en pratique un axe horizontal, sur un châssis.

Pour l'immobilisation et l'entraînement en rotation de la lentille ophtalmique 10 à usiner, la meuleuse 610 est équipée de moyens de support aptes à serrer et à entraîner en rotation la lentille ophtalmique 10. Ces moyens de support comprennent deux arbres de serrage et d'entraînement en rotation 612, 613. Ces deux arbres 612, 613 sont alignés l'un avec l'autre suivant un deuxième axe A2, appelé axe de blocage, parallèle au premier axe A1. Les deux arbres 612, 613 sont entraînés en rotation de façon synchrone par un moteur (non représenté), via un mécanisme d'entraînement commun (non représenté) embarqué sur la bascule 611. Ce mécanisme commun d'entraînement synchrone en rotation est de type courant, connu en lui-même.

En variante, on pourra aussi prévoir d'entraîner les deux arbres par deux moteurs distincts synchronisés mécaniquement ou électroniquement. Selon l'invention, le dispositif 6 de détourage et de perçage comporte en outre un système de commande électronique et informatique (non représenté) tel qu'un microordinateur intégré ou un ensemble de circuits intégrés dédiés programmé pour piloter la rotation ROT des arbres 612, 613.

L'arbre 613 est mobile en translation suivant l'axe de blocage A2, en regard de l'autre arbre 612, pour réaliser le serrage en compression axiale de la lentille entre les deux nez de blocage. L'arbre 613 est commandé pour cette translation axiale par un moteur d'entraînement via un mécanisme d'actionnement (non représentés) piloté par le système de commande électronique et informatique. L'autre arbre 612 est fixe en translation suivant l'axe de blocage A2.

La meuleuse 610 comporte par ailleurs ici un train d'au moins une meule 614, qui est calée en rotation sur un troisième axe A3 parallèle au premier axe A1, et qui est elle aussi dûment entraînée en rotation par un moteur non représenté.

Ici, la meuleuse 610 comporte un train de plusieurs meules 614 montées coaxialement sur le troisième axe A3, pour un ébauchage et une finition du débordage de la lentille ophtalmique à usiner. Ces différentes meules sont adaptées chacune au matériau de la lentille détourée et au type d'opération effectuée (ébauche, finition, matériau minéral ou synthétique, etc.).

Le train de meules est rapporté sur un arbre commun d'axe A3 assurant leur entraînement en rotation lors de l'opération de débordage. Cet arbre commun, qui n'est pas visible sur les figures présentées, est commandé en rotation par un moteur électrique 620 piloté par le système de commande électronique et informatique.

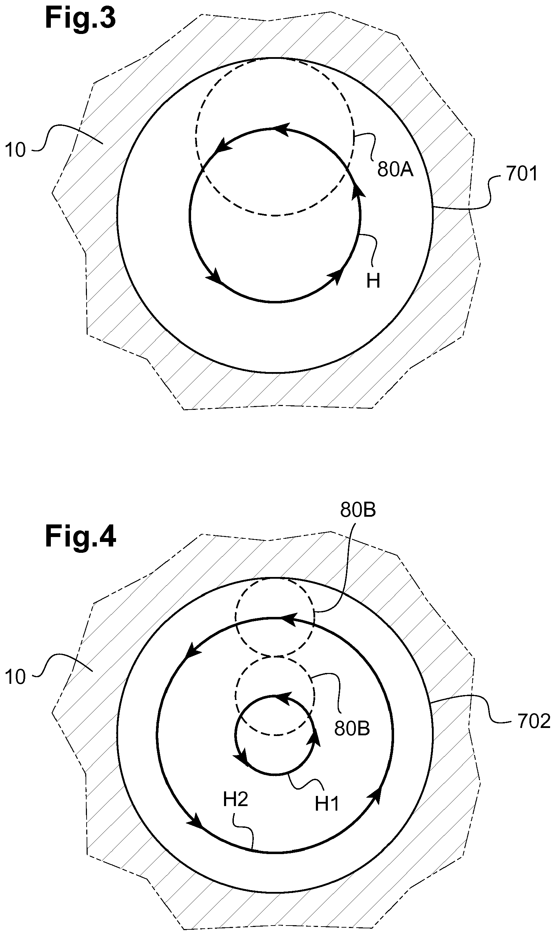

Le train de meules 614 est en outre mobile en translation suivant l'axe A3 et est commandé dans cette translation par une motorisation pilotée. Concrètement, l'ensemble du train de meules 614, de son arbre et de son moteur est porté par un chariot 621 qui est lui-même monté sur des glissières 622 solidaires du bâti pour coulisser suivant le troisième axe A3. Le mouvement de translation du chariot porte-meules 621 est appelé « transfert » et est noté TRA sur la figure 3. Ce transfert est commandé par un mécanisme d'entraînement motorisé (non représenté), tel qu'un système à vis et écrou ou crémaillère, piloté par le système de commande électronique et informatique.

Pour permettre un réglage dynamique de l'entraxe entre l'axe A3 des meules 614 et l'axe A2 de la lentille lors du débordage, on utilise la capacité de pivotement de la bascule 611 autour de l'axe A1. Ce pivotement provoque en effet un déplacement, ici sensiblement vertical, de la lentille ophtalmique enserrée entre les arbres 612, 613 qui rapproche ou éloigne la lentille des meules 614. Cette mobilité, qui permet de restituer la forme de débordage voulue et programmée dans le système de commande électronique et informatique, est appelée restitution et est notée RES sur les figures. Cette mobilité de restitution RES est pilotée par le système de commande électronique et informatique.

Pour l'usinage de la lentille ophtalmique suivant un contour donné, il faut déplacer en conséquence une noix 617 le long du cinquième axe A5, sous le contrôle du moteur 619, pour commander le mouvement de restitution et, d'autre part, faire pivoter conjointement les arbres de support 612, 613 autour du deuxième axe A2, en pratique sous le contrôle du moteur qui les commande. Le mouvement de restitution transversale RES de la bascule 611 et le mouvement de rotation ROT des arbres 612, 613 de la lentille sont pilotés en coordination par un système de commande électronique et informatique (non représenté) de ce dispositif de détourage et de perçage, et selon l'invention dûment programmé à cet effet, pour que tous les points du contour de la lentille ophtalmique soient successivement ramenés au bon diamètre.

La meuleuse 610 illustrée par la figure 6 comporte de plus un module de finition 625 qui embarque des meulettes de chanfreinage et rainage 630, 631 montées sur un axe commun 632 et qui est mobile selon un degré de mobilité, suivant une direction sensiblement transversale à l'axe A2 des arbres 612, 613 de maintien de la lentille ainsi qu'à l'axe A5 de la restitution RES. Ce degré de mobilité est appelé escamotage et est noté ESC sur les figures.

En l'espèce, cet escamotage consiste en un pivotement du module de finition 625 autour de l'axe A3. Concrètement, le module 625 est porté par un levier 626 solidaire d'un manchon tubulaire 627 monté sur le chariot 621 pour pivoter autour de l'axe A3. Pour la commande de son pivotement, le manchon 627 est pourvu, à son extrémité opposée au levier 626, d'une roue dentée 628 qui engrène avec un pignon (non visible aux figures) équipant l'arbre d'un moteur électrique 629 solidaire du chariot 621.

On observe, en résumé, que les degrés de mobilité disponibles sur une telle meuleuse de détourage sont :
- la rotation de la lentille permettant de faire tourner la lentille autour de son axe de maintien, qui est globalement normal au plan général de la lentille,
- la restitution, consistant en une mobilité relative transversale de la lentille (c'est-à-dire dans le plan général de la lentille) par rapport aux meules, permettant de reproduire les différents rayons décrivant le contour de la forme souhaitée de la lentille,
- le transfert, consistant en une mobilité relative axiale de la lentille (c'est-à-dire perpendiculairement au plan général de la lentille) par rapport aux meules, permettant de positionner en vis-à-vis la lentille et la meule de détourage choisie,
- l'escamotage, consistant en une mobilité relative transversale, suivant une direction distincte de celle de la restitution, du module de finition par rapport à la lentille, permettant de mettre en position d'utilisation et de ranger le module de finition.

### Moyens de perçage

En ce qui concerne la fonction de perçage, le module 625 est pourvu d'une perceuse 635 dont la broche est équipée d'un mandrin de fixation de l'outil 80 de perçage selon un axe de perçage A6 (voir figure 7).

La perceuse 635 est montée sur le module 625 pour pivoter autour d'un axe d'orientation A7 sensiblement transversal à l'axe A3 des meules 614 ainsi qu'à l'axe A5 de restitution et, partant, sensiblement parallèle à la direction d'escamotage ESC du module 625. L'axe de perçage A6 est ainsi orientable autour de l'axe d'orientation A7, c'est-à-dire dans un plan proche de la verticale. Ce pivotement d'orientation de la perceuse 635 est noté PIV sur la figure 7. Il s'agit du seul degré de mobilité dédié au perçage.

L'intégration de la fonction de perçage au sein d'une machine de détourage implique que l'outil soit convenablement positionné en regard de la position du trou à percer sur la lentille. Ce positionnement est réalisé au moyen de deux degrés de mobilité préexistants, indépendamment de la fonction de perçage, qui sont l'escamotage ESC d'une part et le transfert TRA d'autre part. Ces deux degrés de mobilité, d'escamotage et de transfert sont de surcroît utilisés pour régler l'orientation de l'axe de perçage A6 de la perceuse 635.

Pour son montage pivotant sur le module 625, le corps 634 de la perceuse 635 possède un manche cylindrique d'axe A7 qui est reçu à pivotement dans un alésage correspondant de même axe A7 ménagé dans le corps du module 625. La perceuse 635 peut ainsi pivoter autour de l'axe d'orientation A7 sur une plage de positions angulaires correspondant à autant d'inclinaisons de l'axe de perçage A6 par rapport à la lentille à percer lorsque le module 625 viendra en position de perçage. Cette plage de positions angulaires est délimitée physiquement par deux butées angulaires solidaires du corps du module 625.

Dans l'exemple illustré, les moyens de réglage de l'orientation comportent, un doigt 638 solidaire du corps 634 de la perceuse 635 et pourvu d'une extrémité sphérique 639 et une platine 650 portant un chemin de came 651 et solidaire du bâti 601 de la meuleuse.

La platine 650 présente une face utile plane 658 qui est sensiblement perpendiculaire à la direction de transfert TRA, ou autrement dit, dans l'exemple illustré, aux axes A2 et A3. Comme les axes A2 et A3 sont ici horizontaux, la face utile 658 de la platine 650 est verticale. Lorsque le module 625 se trouve dans sa plage angulaire de réglage, la face utile 658 de la platine 650 est située en regard de l'extrémité 639 du doigt 638 de la perceuse 635. Le chemin de came de la platine 650 est constitué par une tranchée 651 ménagée en renfoncement de la face utile 658 de la platine 650.

En service, le réglage de l'inclinaison de l'axe de perçage A6 autour de l'axe d'orientation A7 s'effectue de façon automatique, sous le pilotage du système de commande électronique et informatique, en exploitant les mobilités de transfert TRA et d'escamotage ESC du module pour faire coopérer le doigt 638 de la perceuse avec la platine à came 650.

Le dispositif 6 de détourage et de perçage comporte enfin des moyens de mémorisation de la forme et de la dimension souhaitées d'un trou 701 ; 702 ; 703 de perçage de la lentille, encore appelé trou à percer, et de la position de ce trou sur la surface de la lentille. Ces moyens de mémorisation peuvent être constitués d'une mémoire réinscriptible et d'une interface (par exemple un clavier et un écran) permettant d'écrire dans cette mémoire. Ils sont par exemple intégrés au dispositif de commande électronique et informatique.

### Procédé de perçage

Le procédé de perçage selon l'invention comporte tout d'abord une étape de mémorisation de la forme et des dimensions souhaitées du trou 701 ; 702 ; 703 de perçage de la lentille et de la position de ce trou 701 ; 702 ; 703 sur la surface de la lentille par les moyens de mémorisation du dispositif 6 de détourage et de perçage.

Ces informations peuvent par exemple être rentrées manuellement dans la mémoire réinscriptible du dispositif de commande électronique et informatique.

Celui-ci peut également, en variante, comprendre des moyens de communications adaptés à recevoir ces informations sous forme d'un fichier préformaté.

La surface de la lentille ophtalmique 10 concernée est généralement sa face avant 11 convexe par rapport à la pointe de l'outil de perçage 80.

En variante, on peut envisager que la surface de la lentille ophtalmique 10 sur laquelle la position du trou de perçage est repérée peut être la face arrière 12 de cette lentille ophtalmique 10, qui est concave.

Ensuite, le système de commande électronique et informatique du dispositif 6 de détourage et de perçage est programmé pour déterminer une consigne de pilotage du déplacement transversal et de l'avance de l'outil 80 de perçage adaptée au perçage du trou 701 ; 702 :703 dont les caractéristiques de forme, de dimensions et de position ont été mémorisées précédemment.

De manière remarquable, ici, cette consigne de pilotage du déplacement transversal et de l'avance axiale de l'outil de perçage impose à la pointe de cet outil 80 de perçage, sur au moins une passe de perçage, une trajectoire hélicoïdale ou pseudo-hélicoïdale H ; H1, H2 ; H3 fonction de la forme et des dimensions souhaitées du trou 701, 702 ; 703 de perçage.

On entend ici par « avance axiale » de l'outil de perçage un déplacement axial de cet outil selon la direction de l'axe de rotation de cet outil 80, qui correspond à l'axe de perçage A6 décrit précédemment.

On entend ici par « déplacement transversal » de l'outil de perçage un déplacement de cet outil dans un plan orthogonal à l'axe de rotation de cet outil 80.

Ici, les déplacements axial et transversal sont de préférence des translations.

On entend ici par « trajectoire hélicoïdale ou pseudo-hélicoïdale » le chemin correspondant à un mouvement de la pointe de l'outil résultant de la composition d'une translation rectiligne selon la direction de l'axe de rotation de l'outil de perçage, et d'un mouvement de translation dans un plan orthogonal à cette direction, selon un contour fermé dont la forme est celle de la section transversale du trou souhaitée.

Dans le cas le plus fréquent où le trou à percer présente une section transverse circulaire, la trajectoire de la pointe de l'outil de perçage est alors une trajectoire hélicoïdale correspondant à un mouvement de la pointe de l'outil résultant de la composition d'une translation rectiligne selon la direction de l'axe de rotation de l'outil de perçage et d'une translation circulaire selon un cercle.

Dans le cas d'un trou à finalité esthétique, la section transverse de ce trou peut être de forme quelconque, par exemple de forme carrée avec des coins arrondis. La trajectoire de la pointe de l'outil de perçage est alors une trajectoire pseudo-hélicoïdale correspondant à un mouvement de la pointe de l'outil résultant de la composition d'une translation rectiligne selon la direction de l'axe de rotation de l'outil de perçage et d'une translation dans un plan orthogonal à cette direction suivant un contour correspondant à la section transverse du trou souhaitée, par exemple un contour dessinant un carré.

Ici, l'outil de perçage se déplace avec son axe de rotation R qui reste toujours orienté de la même façon. L'outil de perçage se déplace donc globalement selon une translation hélicoïdale ou pseudo-hélicoïdale.

Cette trajectoire hélicoïdale ou pseudo-hélicoïdale de l'outil implique une avance axiale et un déplacement transversal simultanés de l'outil de perçage qui ne sont jamais nuls.

Comme cela est expliqué plus en détail ultérieurement, la consigne de pilotage de l'outil de perçage est tout d'abord déterminée en fonction des dimensions souhaitées du trou 701 ; 702 ; 703 : dimension axiale, mesurée le long d'un axe sensiblement perpendiculaire à la face de la lentille ophtalmique orientée vers l'outil de perçage, confondu en pratique avec l'axe de rotation de l'outil de perçage, et dimensions transverses, mesurées dans un plan perpendiculaire à cet axe sensiblement perpendiculaire à la face de la lentille ophtalmique orientée vers l'outil de perçage.

Il s'agit en pratique le plus souvent de la profondeur et du diamètre du trou 701 ; 702 ; 703 lorsque celui-ci présente une forme cylindrique.

Plus précisément, on envisage différents modes de réalisation de ce procédé selon les dimensions relatives de l'outil 80 et du trou 701 ; 702 ; 703 de perçage.

Les exemples représentés sur les figures 1 à 5 et décrits ci-après correspondent au cas d'un trou à percer de section transverse circulaire.

Selon un premier mode de réalisation, représenté schématiquement sur les figures 1 à 3, on utilise un outil 80 de perçage dont la surface de coupe 80A, représentée en pointillé sur la figure 3, présente un diamètre supérieur ou égal au rayon souhaité du trou 701 de perçage prévu dans la lentille ophtalmique 10.

En outre, l'outil de perçage utilisé ici est un outil de taillage long, ou tout du moins un outil de perçage dont la longueur utile est supérieure ou égale à l'épaisseur de la lentille ophtalmique 10 au niveau du trou 701 à percer.

Dans ce cas, une seule passe de perçage selon la trajectoire hélicoïdale H suffit pour percer le trou 701 aux dimensions souhaitées pour celui-ci, c'est-à-dire pour obtenir le diamètre final et la profondeur finale souhaitée pour le trou 701 de section circulaire.

Le système de commande électronique et informatique du dispositif 6 de détourage et de perçage pilote alors simultanément les mobilités d'avance axiale et de déplacement transversal de l'outil de perçage afin de donner à la pointe de l'outil 80 une trajectoire hélicoïdale déterminée de telle sorte que la surface de coupe 80A de l'outil 80 creuse le trou 701 aux dimensions et à la forme souhaitées.

La consigne de pilotage de l'outil 80 de perçage est donc déterminée en fonction de la forme et des dimensions souhaitées du trou 701 de perçage d'une part, et en fonction de la géométrie de l'outil 80 de perçage, d'autre part.

La géométrie de l'outil de perçage comprend notamment les dimensions radiales et la longueur utile, le long de l'axe de rotation de l'outil, de la surface de coupe 80A de l'outil.

Le pilotage de l'outil de perçage selon la trajectoire hélicoïdale H prévue selon l'invention permet alors non seulement de réaliser le perçage de manière fiable et rapide, mais également de limiter les risques de formation d'éclats en face avant 11 et arrière 12 de la lentille ophtalmique 10, autour du débouché du trou 701. L'état de la surface de chaque face de la lentille ophtalmique 10 est ainsi amélioré.

Le perçage du trou 701 jusqu'à ses dimensions finales souhaitées est notamment plus rapide que lorsque ce perçage est réalisé par contournement.

Selon un deuxième mode de réalisation, représenté schématiquement sur la figure 4, on utilise un outil 80 de perçage dont la surface de coupe 80B présente un diamètre inférieur au rayon souhaité du trou 702 de perçage prévu dans la lentille ophtalmique 10.

En outre, l'outil de perçage utilisé ici est un outil de taillage long, ou tout du moins un outil de perçage dont la longueur utile est supérieure ou égale à l'épaisseur de la lentille ophtalmique 10 au niveau du trou 702 à percer.

Dans ce cas, une seule passe de perçage s'avère insuffisante pour creuser le trou 702 de perçage aux dimensions transverse et axiales finales souhaitées pour ce trou.

Ainsi, selon le deuxième mode de réalisation du procédé de perçage envisagé ici, la consigne de pilotage de l'outil de perçage comprend au moins deux passes, dont une première passe aboutissant au perçage du trou 702 selon des dimensions transverses inférieures aux dimensions transverses souhaitées du trou 702 et selon la profondeur souhaitée du trou et une deuxième passe aboutissant au perçage du trou selon les dimensions transverses souhaitées du trou et la profondeur souhaitée de ce trou.

Le système de commande électronique et informatique du dispositif 6 de détourage et de perçage pilote alors les mobilités d'avance axiale et de déplacement transversal de l'outil 80 de manière à réaliser au moins une passe de perçage sur les deux passes de perçage nécessaires avec une trajectoire hélicoïdale de la pointe de l'outil 80 telle que définie précédemment.

La trajectoire de la pointe de l'outil lors de l'autre passe de perçage est également déterminée par le système de commande électronique et informatique : il peut s'agir d'un perçage selon une trajectoire rectiligne, selon une trajectoire hélicoïdale ou d'un perçage par contournement.

On envisage par exemple, comme cela est le cas dans l'exemple de la figure 4, que le système de commande électronique et informatique pilote les mobilités de l'outil de perçage pour réaliser deux passes de perçage successives, chacune selon une trajectoire hélicoïdale H1, H2 de la pointe de l'outil 80.

Par exemple, pour creuser un trou de section circulaire présentant un diamètre final égal à 2,5 millimètres avec un outil de perçage dont la surface de coupe présente un diamètre égal à 1 millimètre, le dispositif de commande électronique et informatique impose une consigne de pilotage correspondant à la première passe de perçage selon une première trajectoire hélicoïdale H1 de diamètre égal à 0,75 millimètre, de manière à creuser un trou de diamètre égal à 1,75 millimètre, et à la deuxième passe de perçage selon une deuxième trajectoire hélicoïdale H2 de diamètre égal à 1,5 millimètre.

Lorsque le rayon final souhaité pour le trou est inférieur à trois fois le rayon de l'outil de perçage, on peut envisager que la consigne de pilotage imposée par le dispositif de commande électronique et informatique réalise la première passe de perçage selon une trajectoire droite, pour laquelle seule la mobilité d'avance axiale de l'outil de perçage est mise en oeuvre, puis la deuxième passe de perçage selon une trajectoire hélicoïdale afin d'agrandir le trou obtenu lors de la première passe.

On peut enfin envisager qu'on réalise ladite première passe de perçage selon une trajectoire hélicoïdale de la pointe de l'outil de perçage et la deuxième passe de perçage par contournement. De cette façon, la consigne de pilotage de ladite première passe impose le déplacement hélicoïdal de l'outil de perçage, c'est-à-dire une avance axiale et un déplacement transversal simultanés et la consigne de pilotage de la deuxième passe impose une avance sans déplacement transversal de l'outil puis un déplacement transversal sans avance de l'outil.

Afin d'obtenir un trou de perçage dont le rayon final souhaité est supérieur à quatre fois le rayon de l'outil 80 de perçage utilisé, il est évidemment possible d'envisager un nombre quelconque de passes de perçage successives, dont au moins une se fait selon une trajectoire hélicoïdale de la pointe de cet outil.

On peut envisager avantageusement que la dernière passe de perçage, qui permet d'obtenir le trou de perçage aux dimensions finales souhaitées, soit réalisée par contournement.

De cette façon, l'état de la surface latérale interne du trou est amélioré, c'est-à-dire plus lisse.

Dans le cas où la section transversale souhaitée du trou à percer présente une forme non circulaire, on peut envisager que seule la dernière passe de perçage, réalisée selon une trajectoire hélicoïdale ou par contournement, donne la forme finale de la section transversale du trou, et que les premières passes de perçage aboutissent chacune au perçage d'un trou à section circulaire.

La consigne de perçage comprend non seulement la trajectoire de la pointe de l'outil de perçage, mais aussi la vitesse de déplacement de cet outil le long de cette trajectoire.

Cette vitesse de déplacement se décompose en une vitesse d'avance axiale correspondant à la composante axiale de la vitesse de l'outil de perçage, c'est-à-dire la vitesse d'enfoncement de la pointe dans la lentille ophtalmique et une vitesse de déplacement transversal correspondant à la composante transverale de la vitesse de l'outil de perçage, c'est-à-dire sa vitesse dans un plan orthogonal à l'axe de rotation de l'outil.

Sur l'exemple de la figure 2, la vitesse d'avance axiale est uniforme. La trajectoire hélicoïdale de la pointe de l'outil présente alors un pas P constant sur toute la profondeur du perçage. Selon l'invention, le dispositif de commande électronique et informatique détermine une consigne de pilotage telle que l'on réalise la passe de perçage selon une trajectoire hélicoïdale ou pseudo-hélicoïdale en faisant varier la vitesse d'avance axiale de l'outil de perçage.

Plus précisément selon l'invention, à proximité de chaque face avant 11 et arrière 12 de la lentille ophtalmique 10, la vitesse d'avance axiale de l'outil est plus lente que la vitesse d'avance de l'outil 80 de perçage dans une partie centrale de l'épaisseur de la lentille ophtalmique 10.

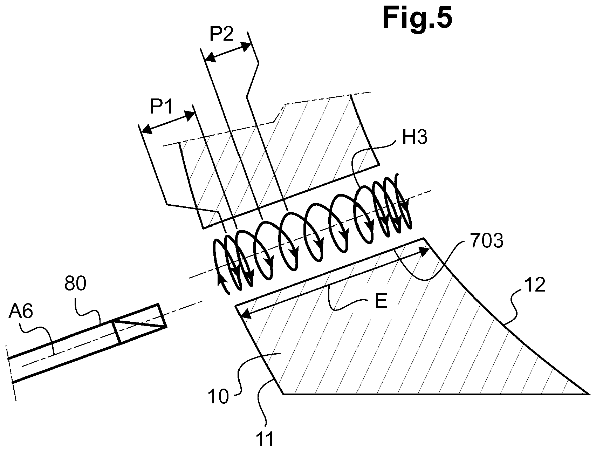

Ainsi, selon le troisième mode de réalisation de la figure 5, dans lequel on envisage une passe de perçage unique selon la trajectoire hélicoïdale H3 pour obtenir le trou 703 de perçage, le pas P1 de la trajectoire hélicoïdale H3 à proximité des faces avant 11 et arrière 12 de la lentille ophtalmique 10 est inférieur au pas P2 de cette trajectoire hélicoïdale au milieu de l'épaisseur de la lentille ophtalmique. En conséquence, avec une vitesse de déplacement globale de l'outil le long de trajectoire constante pendant le perçage, la vitesse d'avance axiale de cet outil est plus lente lorsque le pas de la trajectoire est plus petit, à proximité des faces avant et arrière, et la vitesse d'avance axiale est plus grande au milieu de l'épaisseur de la lentille, lorsque le pas de la trajectoire est plus grand.

De cette façon, les risques d'éclats en face avant et arrière de la lentille sont limités tout en minimisant la durée de perçage.

En outre, on peut prévoir, dans le cas du deuxième mode de réalisation, avec une première passe de perçage selon une trajectoire droite et une deuxième passe de perçage selon une trajectoire hélicoïdale ou pseudo-hélicoïdale, que la première passe soit réalisée avec une vitesse d'avance plus rapide que la vitesse d'avance moyenne de la deuxième passe.

De manière générale, la consigne de pilotage déterminée par le système de commande électronique et informatique impose que la vitesse de déplacement de l'outil au cours de la ou des premières passes de perçage soit supérieure à la vitesse de déplacement de l'outil au cours de la dernière passe de perçage qui permet d'atteindre les dimensions finales souhaitées du trou. L'état de la surface latérale intérieure du trou et des faces de la lentille est alors optimisé.

Avantageusement, le système de commande électronique et informatique est programmé pour déterminer la consigne de pilotage du déplacement transversal et de l'avance de l'outil de perçage en fonction, en outre, d'au moins une caractéristique mécanique et/ou géométrique de la lentille distincte de la forme et des dimensions souhaitées du trou de perçage.

En effet, la résistance du matériau formant la lentille ophtalmique ou sa propension à former des éclats en face avant et/ou arrière lors du perçage peuvent être pris en compte lors de la détermination de la consigne de pilotage.

Par exemple, plus le matériau constituant la lentille présentera une dureté, mesurée en Shore A, élevée, plus la vitesse de déplacement de l'outil de perçage est réduite afin de limiter les risques de rupture de l'outil au cours du perçage.

Par exemple, il est difficile de percer une lentille ophtalmique en polycarbonate. La vitesse d'avance de l'outil de perçage est donc réduite pour percer ce type de lentille.

Le module d'Young de la lentille ophtalmique ou une grandeur caractéristique de la rigidité de cette lentille, par exemple égale à un multiplicatif facteur près à l'épaisseur minimale de la lentille multipliée par son module d'Young, peut également être pris en compte.

De manière similaire, plus le matériau constituant la lentille sera fragile et donc sujet à former des éclats, plus la vitesse de déplacement de l'outil de perçage sera réduite afin de limiter la formation de ces éclats. C'est le cas par exemple des lentilles ophtalmiques réalisées en matériau polymère Columbia Resin 39 (CR39), ou en matériau polymère à haut indice de réfraction, par exemple les matériaux d'indice 1,6 et 1, 74.

Les caractéristiques géométriques de la lentille ophtalmique 10, notamment l'épaisseur de la lentille, comme évoqué précédemment, et la distance du trou au bord périphérique de la lentille, peuvent également être prises en compte.

Enfin la consigne de pilotage peut également être déterminée en fonction des caractéristiques mécaniques et/ou géométriques de l'outil 80 de perçage utilisé.

Un outil de perçage de plus grand diamètre ou réalisé dans un matériau plus solide, pourra supporter des efforts plus importants et donc une vitesse de déplacement plus grande dans la lentille ophtalmique.

L'interface des moyens de mémorisation du système de commande électronique et informatique peut à cet effet permettre à l'utilisateur d'indiquer les informations relatives au matériau de la lentille et aux caractéristiques de l'outil de perçage.

En pratique, une fois que la consigne de pilotage est déterminée par le système de commande électronique et informatique, l'outil de perçage 80 est positionné en vis-à-vis de la position mémorisée du trou à percer au point de départ de la trajectoire déterminée.

A cet effet, le système de commande électronique et informatique du dispositif 6 de détourage et de perçage 6 pilote en coordination appropriée les mobilités de transfert TRA du module de finition 625 portant le module de perçage, de restitution RES des arbres de serrage et d'entraînement en rotation 612, 613, d'escamotage ESC du module de finition 625 et éventuellement de rotation ROT de la lentille pour obtenir les mobilités relatives d'avance axiale et de déplacement transversal de l'outil par rapport à la lentille nécessaires à la réalisation du trou de perçage.

Ici, la mobilité d'avance relative de l'outil de perçage par rapport à la lentille peut être obtenue par une mobilité composée par exemple à partir de la mobilité d'escamotage ESC du module de finition 625 et de la mobilité de transfert TRA du module de finition 625. En variante, la mobilité d'avance relative de l'outil de perçage par rapport à la lentille peut être obtenue au moyen d'une mobilité simple supplémentaire par déplacement de l'outil de perçage le long de son axe de perçage par rapport au module de finition 625.

Pour débuter le perçage, on perce la lentille au moyen de l'outil disposé perpendiculairement à la surface de la lentille ophtalmique, au point de départ de perçage.

Le système de commande électronique et informatique pilote l'outil de perçage pour régler l'orientation de l'outil en pilotant en coordination appropriée les mobilités de transfert TRA, de restitution RES et de rotation ROT de telle sorte que l'axe de perçage A6 soit sensiblement confondu avec la normale à la lentille au point de départ considéré. Après avoir convenablement orienté l'outil, on débute le perçage en ce point de départ. L'outil est alors entraîné en rotation et déplacé en translation suivant l'axe de perçage A7, c'est-à-dire suivant sa mobilité d'avance, vers le point de départ jusqu'à percer la lentille.

L'outil 80 de perçage est alors déplacé selon la consigne de perçage déterminée par le système de commande électronique et informatique.

Lors de la passe de perçage suivant la trajectoire hélicoïdale ou pseudo-hélicoïdale, le mouvement de l'outil 80 comprend à la fois une composante axiale non nulle suivant l'axe de rotation de l'outil et une composante transversale non nulle dans un plan perpendiculaire à l'axe de rotation de l'outil.

Selon un exemple, le perçage est réalisé en une seule passe en "pleine matière", c'est-à-dire que la profondeur de matière enlevée est égale au diamètre de l'outil.

Lorsque plusieurs passes sont nécessaires pour le perçage, comme selon le deuxième mode de réalisation, la première passe de perçage est réalisée en pleine matière.

Ensuite, les passes suivantes réalisent un fraisage du trou suivant des trajectoires dont la forme correspond de préférence, mais pas obligatoirement, à la forme du trou souhaitée, mais de plus faible dimension. A chaque nouvelle passe de fraisage, la trajectoire de l'outil est élargie. Après plusieurs passes de fraisage, l'outil se retrouve à proximité du contour souhaité du trou à réaliser. L'outil est alors piloté pour réaliser une passe de fraisage suivant une consigne de pilotage qui correspond directement à la forme et à la dimension souhaitées du trou de perçage.

Comme évoqué précédemment, cette dernière passe de fraisage est réalisée selon une consigne de pilotage de l'outil imposant une trajectoire hélicoïdale ou un perçage par contournement.

On a décrit ici des exemples de réalisation pour lesquels la consigne de pilotage est prédéterminée par le système de commande électronique et informatique avant le début du perçage lui-même.

En variante, on peut envisager que la consigne de pilotage de l'outil pour le perçage du trou soit déterminée dynamiquement pendant le perçage de la lentille.

La consigne de pilotage de l'outil peut alors par exemple prendre en compte un effort exercé par la lentille sur l'outil de perçage et/ou l'amplitude de la flexion de cet outil pendant le perçage, afin de limiter les risques de rupture de cet outil.

A cet effet, lorsque l'effort exercé sur l'outil et/ou la flexion de l'outil de perçage dépasse une valeur seuil prédéterminée, la vitesse d'avance axiale de cet outil est diminuée.

Les valeurs de l'effort et/ou de la flexion de l'outil de perçage prises en compte sont de préférence mesurées pendant le perçage.

Dans le cas où l'outil de perçage est une fraise à taillage court, ou tout du moins un outil dont la longueur utile est inférieure à l'épaisseur de la lentille au niveau du trou à percer, le système de commande électronique et informatique est programmé pour prendre en compte le fait que lorsque la longueur utile, c'est-à-dire taillée, de l'outil est entièrement enfoncée dans la lentille pendant le perçage, les copeaux de lentille n'ont plus la possibilité d'être évacués vers l'extérieur de la lentille.

Ainsi, dans ce cas, la consigne de pilotage comporte plusieurs passes, chaque passe aboutissant à l'enfoncement de l'outil dans la lentille sur une longueur inférieure à la longueur utile de cet outil. Entre chaque passe, l'outil est entièrement sorti du trou percé dans la lentille.

Dans les exemples représentés ici, le trou de perçage souhaité est traversant. En variante, on peut bien entendu envisager que ce trou soit borgne, c'est-à-dire non traversant.

En outre, ce trou peut éventuellement déboucher sur la tranche de la lentille. Il s'agit alors d'un crantage. Le procédé selon l'invention n'est pas modifié.

Le procédé de perçage selon l'invention, qui impose une passe de perçage selon une trajectoire hélicoïdale, permet de réduire les efforts d'usinage sur l'outil de perçage, quelles que soient les dimensions du trou que l'on souhaite percer. Il permet également de réduire le temps nécessaire pour réaliser le perçage.

Ainsi, les phénomènes de flexion de l'outil de perçage sont limités : les risques de casse de cet outil sont diminués et les dimensions finales du trou percé sont plus précises. En d'autres termes, le respect des cotes est amélioré.

En outre, le risque de provoquer des éclats en face avant et/ou arrière de la lentille ophtalmique lors du perçage est limité.

Enfin, ce procédé permet avantageusement l'utilisation d'un même outil de perçage, présentant une surface de coupe de diamètre donné, pour percer des trous de dimensions transverses variées. On peut par exemple percer des trous de diamètre compris entre 0,5 millimètre et 3 millimètres avec un outil de perçage de diamètre égal à 0,5 millimètre ou encore percer des trous de diamètre compris entre 1.0 millimètre et 6.0 millimètres avec un outil de perçage de diamètre égal à 1.0 millimètre.

Cet outil de perçage peut également être utilisé pour réaliser le détourage de la lentille, notamment lorsqu'il s'agit d'une fraise à taillage court.

On peut enfin envisager l'utilisation d'un outil de perçage étagé dont une partie d'extrémité libre forme une surface de coupe pour le perçage et une autre partie abrasive peut être utilisée pour les étapes de finitions du détourage de la lentille ophtalmique.

## Revendications

1. Procédé de perçage d'une lentille ophtalmique (10) comportant les étapes suivantes :
- mémorisation de la forme et des dimensions souhaitées d'un trou (701 ; 702 ; 703) de perçage de la lentille ophtalmique (10) et de la position du débouché de ce trou (701 ; 702 ; 703) de perçage sur l'une des faces (11 , 12) de la lentille ophtalmique (10),
- positionnement d'un outil (80) de perçage en vis-à-vis de la position mémorisée du trou (701 ; 702 ; 703) à percer,
- détermination d'une consigne de pilotage du déplacement transversal et de l'avance axiale de l'outil (80) de perçage, et,
- perçage de la lentille ophtalmique (10) suivant ladite consigne de pilotage,
**caractérisé en ce que** la consigne de pilotage du déplacement transversal et de l'avance axiale de l'outil (80) de perçage impose à la pointe de cet outil (80) de perçage, sur au moins une passe de perçage, une trajectoire hélicoïdale ou pseudo-hélicoïdale (H ; H1, H2 ; H3) fonction de la forme et des dimensions souhaitées du trou (701 ; 702 ; 703) de perçage, et
**en ce que** l'avance axiale de l'outil (80) sur ladite passe de perçage varie de telle sorte qu'elle est plus lente à proximité des faces (11, 12) de la lentille ophtalmique (10) que dans la partie centrale de l'épaisseur de la lentille ophtalmique (10).

2. Procédé de perçage selon la revendication précédente, selon lequel on détermine la consigne de pilotage du déplacement transversal et de l'avance de l'outil (80) de perçage en fonction d'au moins une caractéristique mécanique et/ou géométrique de la lentille ophtalmique (10) distincte de la forme et des dimensions souhaitées du trou (701 ; 702 ; 703) de perçage.

3. Procédé de perçage selon la revendication précédente, selon lequel on détermine la consigne de pilotage du déplacement transversal et de l'avance de l'outil (80) de perçage en fonction d'au moins l'épaisseur (E) de la lentille ophtalmique (10).

4. Procédé de perçage selon l'une des revendications 2 et 3, selon lequel on détermine la consigne de pilotage du déplacement transversal et de l'avance de l'outil (80) de perçage en fonction au moins du matériau de la lentille ophtalmique (10).

5. Procédé de perçage selon l'une des revendications précédentes, selon lequel on détermine la consigne de pilotage du déplacement transversal de l'outil (80) de perçage en fonction d'au moins une caractéristique mécanique et/ou géométrique de l'outil (80) de perçage.

6. Procédé de perçage selon l'une des revendications précédentes, selon lequel on détermine la vitesse d'avance de l'outil (80) de perçage en fonction de la profondeur de l'enfoncement de la pointe de l'outil (80) de perçage dans la lentille ophtalmique (10).

7. Procédé de perçage selon l'une des revendications précédentes, selon lequel la consigne de pilotage de l'outil (80) de perçage comprend une passe unique aboutissant au perçage du trou (701 ; 702 ; 703) de perçage selon la forme et les dimensions souhaitées du trou (701 ; 702 ; 703) de perçage.

8. Procédé de perçage selon l'une des revendications 1 à 6, selon lequel la consigne de pilotage de l'outil (80) de perçage comprend au moins deux passes, dont une première passe aboutissant au perçage du trou (701 ; 702 ; 703) selon des dimensions transverses inférieures aux dimensions transverses souhaitées du trou (701 ; 702 ; 703) et selon la profondeur souhaitée du trou (701 ; 702 ; 703) et une deuxième passe aboutissant au perçage du trou (701 ; 702 ; 703) selon les dimensions transverses souhaitées du trou (701 ; 702 ; 703) et la profondeur souhaitée de ce trou (701 ; 702 ; 703).

9. Procédé de perçage selon la revendication précédente, selon lequel la consigne de pilotage de ladite première passe impose un déplacement plus rapide de l'outil (80) de perçage que la consigne de pilotage de la deuxième passe, qui impose la trajectoire hélicoïdale ou pseudo-hélicoïdale (H1, H2) de la pointe de l'outil (80) de perçage.

10. Procédé selon la revendication 8, selon lequel la consigne de pilotage de ladite première passe impose la trajectoire hélicoïdale ou pseudo-hélicoïdale de l'outil de perçage et la consigne de pilotage de la deuxième passe impose une avance axiale sans déplacement transversal de l'outil ou un déplacement transversal sans avance axiale de l'outil.

11. Procédé de perçage selon l'une des revendications précédentes, selon lequel la détermination de la consigne de pilotage est réalisée dynamiquement pendant le perçage de la lentille ophtalmique.

12. Dispositif (6) de perçage numérique comprenant un outil (80) de perçage et un système de commande électronique et informatique programmé pour déterminer une consigne de pilotage du déplacement transversal et de l'avance de l'outil (80) afin de piloter cet outil (80) selon le procédé de perçage de l'une des revendications précédentes.

13. Dispositif (6) selon la revendication 12, dans lequel l'outil (80) de perçage est également adapté à réaliser le détourage de la lentille ophtalmique (10).

## Patentansprüche

1. Verfahren zum Bohren einer ophthalmischen Linse (10), das die folgenden Schritte aufweist:
- Speichern der gewünschten Form und der gewünschten Abmessungen eines Bohrlochs (701; 702; 703) der ophthalmischen Linse (10) und der Stellung der Ausmündung dieses Bohrlochs (701; 702; 703) auf einer der Seiten (11, 12) der ophthalmischen Linse (10),
- Positionieren eines Bohrwerkzeugs (80) gegenüber der gespeicherten Stellung des zu bohrenden Lochs (701; 702; 703),
- Bestimmen eines Steuersollwerts der Querverschiebung und des axialen Vorschubs des Bohrwerkzeugs (80), und
- Bohren der ophthalmischen Linse (10) gemäß dem Steuersollwert,
**dadurch gekennzeichnet, dass** der Steuersollwert der Querverschiebung und des axialen Vorschubs des Bohrwerkzeugs (80) der Spitze dieses Bohrwerkzeugs (80) über mindestens einen Bohrarbeitsgang eine spiralförmige oder pseudo-spiralförmige Bahn (H; H1, H2; H3) abhängig von der gewünschten Form und den gewünschten Abmessungen des Bohrlochs (701; 702; 703) vorgibt, und
dass der Vorschub des Bohrwerkzeugs (80) über den Bohrarbeitsgang so variiert, dass er in der Nähe der Seiten (11, 12) der ophthalmischen Linse (10) langsamer ist als im zentralen Teil der Dicke der ophthalmischen Linse (10).

2. Bohrverfahren nach dem vorhergehenden Anspruch, wobei der Steuersollwert der Querverschiebung und des Vorschubs des Bohrwerkzeugs (80) abhängig von mindestens einem mechanischen und/oder geometrischen Merkmal der ophthalmischen Linse (10) bestimmt wird, das sich von der gewünschten Form und den gewünschten Abmessungen des Bohrlochs (701; 702; 703) unterscheidet.

3. Bohrverfahren nach dem vorhergehenden Anspruch, wobei der Steuersollwert der Querverschiebung und des Vorschubs des Bohrwerkzeugs (80) abhängig von mindestens der Dicke (E) der ophthalmischen Linse (10) bestimmt wird.

4. Bohrverfahren nach einem der Ansprüche 2 und 3, wobei der Steuersollwert der Querverschiebung und des Vorschubs des Bohrwerkzeugs (80) abhängig mindestens vom Material der ophthalmischen Linse (10) bestimmt wird.

5. Bohrverfahren nach einem der vorhergehenden Ansprüche, wobei der Steuersollwert der Querverschiebung des Bohrwerkzeugs (80) abhängig von mindestens einem mechanischen und/oder geometrischen Merkmal des Bohrwerkzeugs (80) bestimmt wird.

6. Bohrverfahren nach einem der vorhergehenden Ansprüche, wobei die Vorschubgeschwindigkeit des Bohrwerkzeugs (80) abhängig von der Tiefe des Eindringens der Spitze des Bohrwerkzeugs (80) in die ophthalmische Linse (10) bestimmt wird.

7. Bohrverfahren nach einem der vorhergehenden Ansprüche, wobei der Steuersollwert des Bohrwerkzeugs (80) einen einzigen Arbeitsgang enthält, der zum Bohren des Bohrlochs (701; 702; 703) gemäß der gewünschten Form und den gewünschten Abmessungen des Bohrlochs (701; 702; 703) führt.

8. Bohrverfahren nach einem der Ansprüche 1 bis 6, wobei der Steuersollwert des Bohrwerkzeugs (80) mindestens zwei Arbeitsgänge enthält, von denen ein erster Arbeitsgang zum Bohren des Lochs (701; 702; 703) gemäß kleineren Querabmessungen als die gewünschten Querabmessungen des Lochs (701; 702; 703) und gemäß der gewünschten Tiefe des Lochs (701; 702; 703) führt, und ein zweiter Arbeitsgang zum Bohren des Lochs (701; 702; 703) gemäß den gewünschten Querabmessungen des Lochs (701; 702; 703) und der gewünschten Tiefe dieses Lochs (701; 702; 703) führt.

9. Bohrverfahren nach dem vorhergehenden Anspruch, wobei der Steuersollwert des ersten Arbeitsgangs eine schnellere Verschiebung des Bohrwerkzeugs (80) vorgibt als der Steuersollwert des zweiten Arbeitsgangs, der die spiralförmige oder pseudo-spiralförmige Bahn (H1, H2) der Spitze des Bohrwerkzeugs (80) vorgibt.

10. Verfahren nach Anspruch 8, wobei der Steuersollwert des ersten Arbeitsgangs die spiralförmige oder pseudo-spiralförmige Bahn des Bohrwerkzeugs vorgibt, und der Steuersollwert des zweiten Arbeitsgangs einen axialen Vorschub ohne Querverschiebung des Bohrwerkzeugs oder eine Querverschiebung ohne axialen Vorschub des Bohrwerkzeugs vorgibt.

11. Bohrverfahren nach einem der vorhergehenden Ansprüche, wobei die Bestimmung des Steuersollwerts während des Bohrens der ophthalmischen Linse dynamisch durchgeführt wird.

12. Digitale Bohrvorrichtung (6), die ein Bohrwerkzeug (80) und ein elektronisches und EDV-Steuersystem enthält, das programmiert ist, um einen Steuersollwert der Querverschiebung und des Vorschubs des Bohrwerkzeugs (80) zu bestimmen, um dieses Werkzeug (80) gemäß dem Bohrverfahren eines der vorhergehenden Ansprüche zu steuern.

13. Vorrichtung (6) nach Anspruch 12, wobei das Bohrwerkzeug (80) ebenfalls geeignet ist, die Kantenbearbeitung der ophthalmischen Linse (10) durchzuführen.

## Claims

1. Method for drilling an ophthalmic lens (10), comprising the following steps of:
- storing the desired shape and dimensions of a drill hole (701; 702; 703) in the ophthalmic lens (10) and the position at which this drill hole (701; 702; 703) opens onto one of the faces (11, 12) of the ophthalmic lens (10),
- positioning a drilling tool (80) opposite the stored position of the hole (701; 702; 703) to be drilled,
- determining a control setpoint for the transverse movement and the axial feed of the drilling tool (80), and
- drilling the ophthalmic lens (10) in accordance with said control setpoint,
**characterized in that** the control setpoint for the transverse movement and the axial feed of the drilling tool (80) causes the tip of this drilling tool (80), during at least one drilling pass, to follow a helical or pseudo-helical trajectory (H; H1, H2; H3) depending on the desired shape and dimensions of the drill hole (701; 702; 703), and
**in that** the axial feed of the tool (80) during said drilling pass varies such that it is slower close to the faces (11, 12) of the ophthalmic lens (10) than in the central part of the thickness of the ophthalmic lens (10).

2. Drilling method according to the preceding claim, wherein the control setpoint for the transverse movement and the feed of the drilling tool (80) is determined as a function of at least one mechanical and/or geometric characteristic of the ophthalmic lens (10) that is different from the desired shape and dimensions of the drill hole (701; 702; 703).

3. Drilling method according to the preceding claim, wherein the control setpoint for the transverse movement and the feed of the drilling tool (80) is determined as a function of at least the thickness (E) of the ophthalmic lens (10).

4. Drilling method according to either of Claims 2 and 3, wherein the control setpoint for the transverse movement and the feed of the drilling tool (80) is determined as a function of at least the material of the ophthalmic lens (10).

5. Drilling method according to one of the preceding claims, wherein the control setpoint for the transverse movement of the drilling tool (80) is determined as a function of at least one mechanical and/or geometric characteristic of the drilling tool (80) .

6. Drilling method according to one of the preceding claims, wherein the feed rate of the drilling tool (80) is determined as a function of the depth to which the tip of the drilling tool (80) has passed into the ophthalmic lens (10).

7. Drilling method according to one of the preceding claims, wherein the control setpoint for the drilling tool (80) comprises a single pass that results in the drill hole (701; 702; 703) being drilled with the desired shape and dimensions of the drill hole (701; 702; 703).

8. Drilling method according to one of Claims 1 to 6, wherein the control setpoint for the drilling tool (80) comprises at least two passes, with a first pass resulting in the hole (701; 702; 703) being drilled with transverse dimensions that are less than the desired transverse dimensions of the hole (701; 702; 703) and with the desired depth of the hole (701; 702; 703), and a second pass resulting in the hole (701; 702; 703) being drilled with the desired transverse dimensions of the hole (701; 702; 703) and the desired depth of this hole (701; 702; 703).

9. Drilling method according to the preceding claim, wherein the control setpoint for said first pass causes the drilling tool (80) to move more quickly than in the case of the control setpoint for the second pass, which causes the tip of the drilling tool (80) to follow the helical or pseudo-helical trajectory (H1, H2) .

10. Method according to Claim 8, wherein the control setpoint for said first pass causes the drilling tool to follow the helical or pseudo-helical trajectory and the control setpoint for the second pass causes an axial feed of the tool without transverse movement or causes a transverse movement of the tool without axial feed.

11. Drilling method according to one of the preceding claims, wherein the control setpoint is determined dynamically during the drilling of the ophthalmic lens.

12. CNC drilling device (6) comprising a drilling tool (80) and an electronic and computerized control system programmed to determine a control setpoint for the transverse movement and the feed of the tool (80) in order to control this tool (80) in accordance with the drilling method in one of the preceding claims.

13. Device (6) according to Claim 12, wherein the drilling tool (80) is also suitable for trimming the ophthalmic lens (10).
